(19) Europäisches Patentamt
European Patent Office
Office européen des brevets

(11) Veröffentlichungsnummer: **0 212 361 A2**

(12) **EUROPÄISCHE PATENTANMELDUNG**

(21) Anmeldenummer: **86110447.9**

(22) Anmeldetag: **29.07.86**

(51) Int. Cl.⁴: **C 09 B 67/22**, C 09 B 17/00

(30) Priorität: **10.08.85 DE 3528755**
**17.09.85 DE 3533074**
**21.05.86 DE 3617010**

(43) Veröffentlichungstag der Anmeldung: **04.03.87 Patentblatt 87/10**

(84) Benannte Vertragsstaaten: **CH DE FR GB LI**

(71) Anmelder: **BAYER AG, Konzernverwaltung RP Patentabteilung, D-5090 Leverkusen 1 Bayerwerk (DE)**

(72) Erfinder: **Aign, Volker, Dipl.-Ing., Knipprather Strasse 92, D-4019 Monheim (DE)**
Erfinder: **Pusch, Norbert, Dipl.-Ing., Nicolai-Hartmann-Strasse 23, D-5090 Leverkusen (DE)**
Erfinder: **Wienkenhöver, Martin, Dr., Gustav-Freytag-Strasse 2, D-5090 Leverkusen (DE)**
Erfinder: **Paulat, Volker, Dr., Menzelweg 1, D-4019 Monheim (DE)**
Erfinder: **Schubert, Klaus, Dipl.-Ing., Am Feldrein 12 F, D-5000 Köln 80 (DE)**

(54) **Pigmentpräparationen.**

(57) Pigmentpräparationen, enthaltend mindestens ein organisches Pigment oder Ruß, mindestens ein anorganisches Pigment aus der Reihe der Kobaltoxidmischoxidpigmente, Kupferoxidmischoxidpigmente, Eisenoxidpigmente, Chromoxidpigmente, Titandioxid, Titandioxidmischoxidpigmente, Bariumsulfat sowie, bezogen auf das Pigment- bzw. Pigment-Ruß-Gesamtgewicht, etwa 3 bis etwa 15 Gew.-%, mindestens eines nichtionogenen Tensids und gegebenenfalls einen oder mehrere für wäßrige Pigmentpräparationen übliche Zusatzstoffe sowie die Verwendung dieser Präparationen bei der Herstellung von Dispersionsanstrichfarben, Dispersionslackfarben und Druckfarben.

EP 0 212 361 A2

 0212361

BAYER AKTIENGESELLSCHAFT 5090 Leverkusen, Bayerwerk
Konzernverwaltung RP
Patentabteilung PG/Ke-c

## Pigmentpräparationen

Die Erfindung betrifft wäßrige Pigmentpräparationen enthaltend mindestens ein organisches Pigment oder Ruß, mindestens ein anorganisches Pigment aus der Reihe der Kobaltoxidmischoxidpigmente, Kupferoxidmischoxidpigmente, Eisenoxidpigmente, Chromoxidpigmente, Titandioxid, Titandioxidmischoxidpigmente, Bariumsulfat sowie, bezogen auf das Pigment- bzw. Pigment-Ruß-Gesamtgewicht, etwa 3 bis etwa 15 Gew.-% mindestens eines nichtionogenen Tensids und gegebenenfalls einen oder mehrere für wäßrige Pigmentpräparationen übliche Zusatzstoffe.

In obigem Rahmen sind folgende Pigmentpräparationen bevorzugt:

I. Pigmentpräparationen, die mindestens ein gelbes, oranges oder rotes organisches Pigment und ein Titandioxidmischpigment und/oder Titandioxid und/oder Bariumsulfat enthalten.

II. Pigmentpräparationen, die mindestens ein blaues oder grünes organisches Pigment oder Ruß und mindestens ein anorganisches Pigment aus der Reihe der Kobaltoxidmischoxidpigmente, Kupferoxidmischoxidpigmente, Eisenoxidpigmente, Chromoxidpigmente und/oder Titandioxid und/oder Bariumsulfat enthalten.

Die gelben, orangen oder roten organischen Pigmente entstammen bevorzugt der Azo-, Anthrachinon- oder polycyclischen Reihe, besonders bevorzugt der Azoreihe.

Beispielhaft seien genannt:
P.Y. 3 C.I. 11710, P.Y. 83 C.I. 21108, P.O. 34 C.I. 21115.

Ganz besonders bevorzugt sind:

P.Y. 74 C.I. 11741, P.O. 5 C.I. 12075, P.R. 112 C.I. 12370 und das Orangepigment der Formel

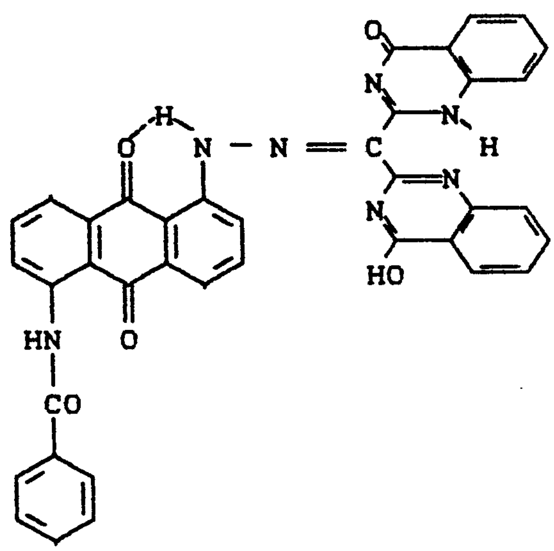

Die blauen oder grünen organischen Pigmente entstammen bevorzugt der halogenierten oder nichthalogenierten Cu-Phthalocyanin-Reihe. Beispielhaft seien genannt: P. Blue 15:3 C.I. 74160, P. Green 7 C.I. 74260 und P. Green 36 C.I. 74265.

Die in Colour Index unter der Bezeichnung Pigment Black 7 zusammengefaßten Farbruße können bei den erfindungsgemäßen Präparationen eingesetzt werden.

Titandioxidmischoxidpigmente sind Pigmente, die durch Reaktion von Titandioxid mit farbgebenden Metalloxiden hergestellt worden sind.

Beispielhaft seien Nickeltitangelb, Chromtitangelb und Bariumtitanat genannt.

Bevorzugt sind Nickelrutilgelb und Chromrutilgelb der C.I. Constitution Nos. 77788 und 77310.

Kobaltoxid- bzw. Kupferoxidmischoxidpigmente (Strukturtyp Spinell bzw. inverser Spinell) sind Pigmente, die durch Reaktion von Kobaltoxid bzw. Kupferoxid mit Metalloxiden, z.B. Aluminiumoxid oder Oxide der Übergangselemente, z.B. Titan, Chrom, Eisen, Nickel, Zink hergestellt worden sind.

Bevorzugt sind Kobaltspinellgrün und Kobaltspinellblau sowie Kupferspinellschwarz wie P. Blue 36 C.I. 77343, P. Blue 28 C.I. 77346, P. Black 28 C.I. 77428 sowie

Eisenoxid- und/oder Chromoxidpigmente wie P. Green 19 C.I. 77335, P. Green 17 C.I. 77288 sowie P. Red 101, P. Red 102, P. Brown 6, P. Brown 7 C.I. 77491, P. Yellow 42, P. Yellow 43, P. Brown 6, P. Brown 7 C.I. 77492 und P. Green 18 C.I. 77289.

Als nichtionogene Tenside kommen beispielsweise Anlagerungsprodukte von Alkylenoxiden, insbesondere Ethylenoxid, an höhere Fettsäuren, Alkohole, Phenole, Säureamide, Mercaptane, Amine oder Alkylphenole infrage. Die Anlagerungsprodukte können beispielsweise aus 5 bis 50 mol Alkylenoxid und 1 mol Fettsäure, Alkohol, Phenol, Säureamide, Mercaptan, Amin oder Alkylphenol, die mindestens 4, vorzugsweise mindestens 6 C-Atome aufweisen, erhalten werden. Als nichtionogene Tenside kommen auch Anlagerungsprodukte von Alkylenoxiden, insbesondere Ethylenoxid, an Polypropylenoxid oder an Zucker, sowie oxethylierte und nichtoxethylierte Zuckerderivate, wie Fettsäureester des Pentaerythrits oder der Saccharose, infrage.

Beispiele für nichtionogene Tenside sind insbesondere: Anlagerungsprodukte von 5 bis 20 mol Ethylenoxid an Stearinsäure, Oleylalkohol, Polypropylenglykol, Nonylphenol, Ölsäureamid, Dodecylamin, Benzylhydroxydiphenyl, Ethanolammoniumdodecylbenzolsulfonat.

Ein großer Teil dieser Verbindungen und weitere in Betracht kommende nichtionogene Tenside sind z.B. in N. Schönfeldt, Grenzflächenaktive Ethylenoxid-Addukte, Seiten 42 bis 95 (1976) und in K. Lindner, Tenside-Textilhilfsmittel-Waschrohstoffe, Band 1, Seiten 837 bis 917 (1964), beschrieben.

Besonders bevorzugt werden die aus der DE-OS 2 711 240 bekannten nichtionogenen Tenside eingesetzt. Dabei handelt es sich um wasserlösliche Oxalkylierungsprodukte, die durch Kondensation von phenolischen OH-Gruppen aufweisenden Aromaten mit Formaldehyd und Aminen, die eine gegenüber Formaldehyd reaktionsfähige NH-Gruppe enthalten, erhältlich sind oder um Derivate solcher Alkylierungsprodukte.

Insbesondere werden wasserlösliche Oxalkylierungsprodukte von Verbindungen der Formel

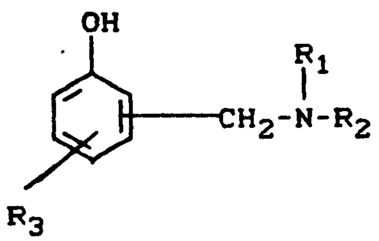

(I)

worin

$R_1$ den einwertigen Rest eines gegebenenfalls substituierten aliphatischen, cycloaliphatischen oder aromatischen Kohlenwasserstoffs,

$R_2$ Wasserstoff oder den einwertigen Rest eines gegebenenfalls substituierten aliphatischen, cycloaliphatischen oder aromatischen Kohlenwasserstoffs und

$R_3$ Wasserstoff, $C_1$-$C_{20}$-Alkyl, $C_5$-$C_7$-Cycloalkyl, Phenyl, Benzyl, Halogen, Hydroxy, $C_1$-$C_{18}$-Alkoxy, Carboxy oder $C_1$-$C_{18}$-Alkoxycarbonyl bedeuten.

Die Oxalkylierung der vorstehend genannten Produkte erfolgt vorzugsweise mit Ethylenoxid, gegebenenfalls zusammen mit Propylenoxid.

Von besonderer Bedeutung sind wasserlösliche Oxalklylierungsprodukte aus 10 bis 100 mol Ethylenoxid und einem Kondensationsprodukt aus

a) Phenyl oder $C_6$-$C_{12}$-Alkylphenol,

b) $C_6$-$C_{20}$-Alkylamin oder Cyclohexylamin und

c) Formaldehyd.

Besonders bevorzugt werden weiterhin die aus der DE-OS 2 732 732 bekannten nichtionogenen Tenside eingesetzt. Dabei handelt es sich um wasserlösliche Oxalkylierungsprodukte von Verbindungen, die durch Anlagerung von Styrol oder seinen Derivaten an Phenole oder Naphthole erhältlich sind oder von Derivaten solcher Oxalkylierungsprodukte.

Insbesondere werden wasserlösliche Oxethylierungsprodukte von Verbindungen, die durch Anlagerung von Styrol, Vinyltoluol, α-Methylstyrol oder Divinylbenzol an Phenol, Kresol, Xylenol oder Oxydiphenyl erhältlich sind, eingesetzt.

Von besonderer Bedeutung sind wasserlösliche Oxethylierungsprodukte, die durch Kondensation von 1 bis 3 mol Styrol oder Vinyltoluol und 1 mol Phenol und Umsetzung mit 12 bis 100 mol Ethylenoxid erhalten werden.

Für wäßrige Pigmentpräparationen übliche Zusatzstoffe sind z.B. Eintrocknungsverhinderer und Konservierungsmittel, sowie geringe Mengen anionischer Zusätze wie z.B. das Ethanolaminsalz der Dodecylbenzolsulfonsäure.

Gebräuchliche Eintrocknungsverhinderer sind Glykol, Diglykol, Glycerin oder deren Ether und insbesondere Propandiol-1,2.

Gebräuchliche Konservierungsmittel sind z.B. Formaldehyd abgebende Mittel oder Phenolderivate.

Vorzugsweise enthalten die erfindungsgemäßen Pigmentpräparationen, bezogen auf das Pigment- oder Pigment-Ruß-Gesamtgewicht, etwa 5 bis etwa 12 Gew.-% nichtionogenes Tensid.

Bevorzugt ist weiterhin ein Gewichtsverhältnis von organischem Pigment und/oder Ruß zu anorganischem Pigment von 4-1:1, besonders bevorzugt von 2,5-1,5:1.

Die erfindungsgemäßen Pigmentpräparationen bestehen, bezogen auf das Gesamtgewicht der Präparation, vorzugsweise aus 20 bis 60 Gew.-%, besonders bevorzugt 35 bis 50 Gew.-%, organisches Pigment und/oder Ruß, 10 bis 30 Gew.-%, besonders bevorzugt 14 bis 25 Gew.-% anorganisches Pigment, 3 bis 15 Gew.-%, besonders bevorzugt 3 bis 8 Gew.-% nichtionogenes Tensid, 0 bis 20 Gew.-% eines oder mehrere für wäßrige Pigmentpräparationen übliche Zusatzstoffe und Wasser.

Besonders wertvolle Präparationen sind auch solche, die, bezogen auf das Gesamtgewicht an anorganischem Pigment, 40 bis 200 Gew.-%, bevorzugt 50 bis 150 Gew.-%, Bariumsulfat enthalten.

Die Herstellung der erfindungsgemäßen Pigmentpräparationen erfolgt durch gemeinsame Formierung der Pigmente in herkömmlichen Naßzerkleinerungsaggregaten wie Kugelmühlen, Rotor-Stator-Mühlen, Dissolver, Dispersionskneter etc. mit besonderem Vorteil in schnellaufenden Rührwerkskugelmühlen mit Mahlkörpern in der Größe von 0,1 bis 100 mm, insbesondere mit Glasperlen von 0,1 bis 1 mm.

Die erfindungsgemäßen stabilen Pigmentpräparationen sind einsetzbar zur Herstellung der verschiedensten Dispersionsanstrichfarben (Fassaden- und Innenanstrichfarben) Dispersionslackfarben und Druckfarben (Flexodruck-, Künstlerdruck-, Textildruckfarben), mit besonderem Vorteil jedoch in Textildruckfarben auf wäßriger Basis, glänzenden wäßrigen Dispersionsanstrichfarben oder Dispersionslackfarben die in neuerer Zeit als Ersatz für die bekannten lösungsmittelhaltigen Lackfarben eingesetzt werden. Solche Dispersionslackfarben und glänzende Dispersionsanstrichfarben können nicht mit den bisher bekannten wäßrigen Pigmentzubereitungen, wegen ihres hohen Netzmittelgehaltes, eingefärbt werden. Es tritt Verschlechterung der Wasserfestigkeit, schlechteres Trocknen, ein gewisses Nachkleben sowie ungenügende Blockfestigkeit (Kleben eines Films nach mechanischer Belastung, auch Kleben von Anstrichfilmen aufeinander bei Rahmenkonstruktionen wie Fenster und Türen) auf (Weichmachereffekt).

Diese Nachteile werden durch die erfindungsgemäßen Pigmentpräparationen umgangen. Überraschenderweise hat sich gezeigt, daß bei der Herstellung von wäßrigen Pigmentpräparationen, aus organischen Pigmenten oder Ruß und anorganischen Pigmenten und mindestens einen nichtionogenen Tensid oder einer Mischung aus einem nichtionogenen und einem anionischen Tensid, eine deutliche Absenkung des Netzmittelanteils, bei gleichzeitiger Erhöhung der Pigmentkonzentration möglich ist.

Diese derart hergestellten Pigmentpräparate zeigen ausgezeichnete Verträglichkeit in Dispersionslackfarben. Darüber hinaus wurden sehr gute Verteilbarkeiten (Verträglichkeiten) in den verschiedensten Dispersionsanstrichfarben gefunden.

0212361

Der Einsatz von Propylenglykol (Propandiol-1,2) als Wasserrückhaltemittel bringt als weitere Vorteile den relativ niedrigen Siedepunkt sowie die gute Verträglichkeit mit den Bindemitteln der üblichen Dispersionslackfarben.

Beispiel 1

Eine Mischung aus 45 Gew.-% Pigment Yellow 74 C.I. 11741, 22,5 Gew.-% Pigment Yellow 53 C.I. 77788, 2,4 Gew.-% des nachfolgend beschriebenen Oxalkylierungsproduktes, 1,3 Gew.-% des Kondensationsproduktes aus 2,8 mol Styrol und 1 mol Phenol, umgesetzt mit 29 mol Ethylenoxid, 0,1 Gew.-% eines Formaldehyd abspaltenden Konservierungsmittels, 15 Gew.-% Propandiol-1,2 und 13,7 Gew.-% Wasser wird durch Rühren homogenisiert und anschließend in einer kontinuierlich arbeitenden Rührwerkskugelmühle mit Glasperlen von etwa 0,3 mm ø solange gemahlen, bis die durchschnittliche Teilchengröße kleiner als 2 µm ist.

Zur Herstellung des Oxalkylierungsproduktes werden 99 g (1 mol) Cyclohexylamin mit 5 g 20 %iger Kalilauge und 100 g 30 %igem Formaldehyd 3 Stunden unter Rühren auf 70° C erwärmt, mit 220 g (1 mol) Nonylphenol versetzt und weitere 5 Stunden auf 90 bis 100° C erhitzt. Das entstandene ölige Reaktionsprodukt wird im Vakuum getrocknet, mit Natriummethylat versetzt, das durch Auflösen von 1,5 g Natrium in Methanol bereitet worden war, und auf 140 bis 150° C erhitzt. Unter Stickstoffatmosphäre läßt man unter einem Überdruck von 1 bis 2 bar allmählich 1230 g (28 mol) Ethylenoxid zulaufen. Unter schnellem Verbrauch des Ethylenoxids wird ein Polyglykolether erhalten, der in Wasser klar löslich ist.

Beispiel 2

Eine Mischung aus 40 Gew.-% Pigment Yellow 74 C.I. 11741, 8,4 Gew.-% Pigment White 6 C.I. 77891, 11,6 Gew.-% mikronisiertem Bariumsulfat, 2,63 Gew.-% des in Beispiel 1 beschriebenen Oxalkylierungsproduktes, 2,0 Gew.-% des in Beispiel 1 beschriebenen Kondensationsproduktes, 0,1 Gew.-% eines Formaldehyd abspaltenden Konservierungsmittels, 15 Gew.-% Propandiol-1,2 und 20,27 Gew.-% Wasser wird, wie in Beispiel 1 beschrieben, in einer Rührwerkskugelmühle gemahlen.

Beispiel 3

Eine Mischung aus 40 Gew.-% Pigment Yellow 74 C.I. 11741, 8,4 Gew.-% Pigment Yellow 53 C.I. 77788, 11,6 Gew.-% mikronisiertem Bariumsulfat, 2,63 Gew.-% des in Beispiel 1 beschriebenen Oxalkylierungsproduktes, 2,0 Gew.-% des in Beispiel 1 beschriebenen Kondensationsproduktes, 0,1 Gew.-% eines Formaldehyd abspaltenden Konservierungsmittels, 15 Gew.-% Propandiol-1,2 und 20,27 Gew.-% Wasser wird, wie in Beispiel 1 beschrieben, in einer Rührwerkskugelmühle gemahlen.

Beispiel 4

Eine Mischung aus 36,7 Gew.-% des Pigments der Formel

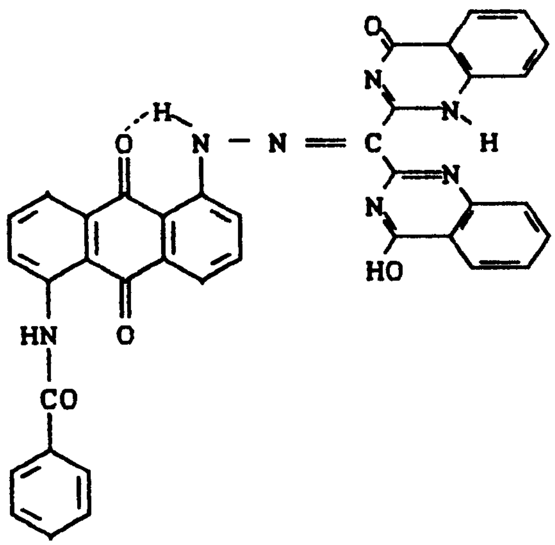

18,3 Gew.-% Pigment Yellow 53 (C.I. 77788), 3,0 Gew.-% des in Beispiel 1 beschriebenen Kondensationsproduktes, 0,1 Gew.-% eines Formaldehyd abspaltenden Konservierungsmittels, 15 Gew.-% Propandiol-1,2, und 26,9 Gew.-% Wasser wird wie in Beispiel 1 beschrieben, in einer Rührwerkskugelmühle gemahlen.

Beispiel 5

Eine Mischung aus 42 Gew.-% Pigment Orange 5 C.I. 12075, 21 Gew.-% Pigment Yellow 53 C.I. 77788, 3,94 Gew.-% des in Beispiel 1 beschriebenen Oxalkylierungsproduktes, 0,1 Gew.-% eines Formaldehyd abspaltenden Konservierungsmittels, 15 Gew.-% Propandiol-1,2 und 17,96 Gew.-% Wasser wird, wie in Beispiel 1 beschrieben, in einer Rührwerkskugelmühle gemahlen.

Beispiel 6

Eine Mischung aus 45 Gew.-% Pigment Red 112 C.I. 12370, 22,5 Gew.-% Pigment Yellow 53 C.I. 77788, 3,75 Gew.-% des in Beispiel 1 beschriebenen Oxalkylierungsproduktes, 2,0 Gew.-% des in Beispiel 1 beschriebenen Kondensationsproduktes, 0,1 Gew.-% eines Formaldehyd abspaltenden Konservierungsmittels, 15 Gew.-% Propandiol-1,2 und 11,65 Gew.-% Wasser wird durch einen Dispersionskneter zu einem Pigmentteig geknetet, wobei man die Gesamtmenge an Emulgator vorlegt und den Pigmentanteil einträgt, oder wie in Beispiel 1 in einer Rührwerkskugelmühle gemahlen. Die Temperatur der Knetung wird unter evtl. Wasserzugabe bei ca. 70° C gehalten. Nach 30 min. Knetdauer wird eine durchschnittliche Pigmentteilchengröße von unter 1 µm erhalten und die Pigmentpaste wird unter Kneten mit Wasser und Propandiol-1,2 verdünnt.

Beispiel 7

Eine Mischung aus 45 Gew.-% Pigment Red 112 C.I. 12370, 14 Gew.-% Pigment White 6 C.I. 77891, 8,5 Gew.-% mikronisiertem Bariumsulfat, 3,75 Gew.-% des in Beispiel 1 beschriebenen Oxalkylierungsproduktes, 2,0 Gew.-% des in Beispiel 1 beschriebenen Kondensationsproduktes, 0,1 Gew.-% eines Formaldehyd abspaltenden Konservierungsmittels, 15 Gew.-% Propandiol-1,2 und 11,65 Gew.-% Wasser wird, wie in Beispiel 6 beschrieben, durch einen Dispersionskneter zu einem Pigmentteig geknetet.

Beispiel 8

Eine Mischung aus 44 Gew.-% Pigment Green 7 (C.I. 74260), 15 Gew.-% Kobaltgrün (P. Green 19 C.I. 77335) oder Pigment Green 17 (C.I. 77288), 6 % eines Polyethers aus Oleylalkohol und 19 mol Ethylenoxid, 0,1 Gew.-% eines Formaldehyd abspaltenden Konservierungsmittels, 15 Gew.-% Propandiol-1,2, 19,9 Gew.-% Wasser wird wie in Beispiel 1 beschrieben, in einer Rührwerkskugelmühle gemahlen.

Beispiel 9

Eine Mischung aus 41 Gew.-% Pigment Blue 15:3 (C.I. 74160), 16 Gew.-% Kobaltoxidmischoxidpigment (Kobaltblau) Pigment Blue 36 C.I. 77343, 3,75 Gew.-% des in Beispiel 1 beschriebenen Oxalkylierungsproduktes 1,5 Gew.-% Ethanolaminsalz der Dodecylbenzolsulfonsäure, 15 Gew.-% Propandiol-1,2, 0,1 % eines Formaldehyd abspaltenden Konservierungsmittels, 22,65 Gew.-% Wasser wird, wie in Beispiel 1 beschrieben, in einer Rührwerkskugelmühle gemahlen.

Beispiel 10

Eine Mischung aus 35 Gew.-% Pigment Black 7 (Farbruß), 15 % Pigment Black 28 C.I. 77428 (Spinellschwarz), 4,5 % des in Beispiel 1 beschriebenen Kondensationsproduktes, 1 % Ethanolaminsalz der Dodecylbenzolsulfonsäure, 15 Gew.-% Propandiol-1,2, 0,1 % eines Formaldehyd abspaltenden Konservierungsmittels, 29,4 % Wasser wird, wie in Beispiel 1 beschrieben, in einer Rührwerkskugelmühle gemahlen.

Patentansprüche

1. Pigmentpräparationen enthaltend mindestens ein organisches Pigment oder Ruß, mindestens ein anorganisches Pigment aus der Reihe Kobaltoxidmischoxidpigmente, Kupferoxidmischoxidpigmente, Eisenoxidpigmente, Chromoxidpigmente, Titandioxid, Titandioxidmischoxidpigmente, Bariumsulfat sowie, bezogen auf das Pigment- bzw. Pigment-Ruß-Gesamtgewicht etwa 3 bis etwa 15 Gew.-%, mindestens eines nichtionogenen Tensids und gegebenenfalls einen oder mehrere für wäßrige Pigmentpräparationen übliche Zusatzstoffe.

2. Pigmentpräparation gemäß Anspruch 1, enthaltend mindestens ein gelbes, oranges oder rotes organisches Pigment und ein Titandioxidmischpigment und/oder Titandioxid.

3. Pigmentpräparation gemäß Anspruch 1, enthaltend mindestens ein blaues oder grünes organisches Pigment oder Ruß und mindestens ein anorganisches Pigment aus der Reihe Kobaltoxidmischoxidpigmente, Kupferoxidmischoxidpigmente, Eisenoxidpigmente, Chromoxidpigmente und/oder Titandioxid.

4. Pigmentpräparation gemäß den Ansprüchen 1 bis 3, enthaltend Bariumsulfat.

5. Pigmentpräparation gemäß den Ansprüchen 1 bis 4, enthaltend ein Anlagerungsprodukt von Alkylenoxiden, insbesondere Ethylenoxid, an höhere Fettsäuren, Alkohole, Phenole, Säureamide, Mercaptane, Amine oder Alkylphenole.

6. Pigmentpräparation gemäß den Ansprüchen 1 bis 4, enthaltend ein wasserlösliches Oxalkylierungsprodukt, das durch Kondensation eines phenolische OH-Gruppen aufweisenden Aromaten mit Formaldehyd und einem Amin, das eine gegenüber Formaldehyd reaktionsfähige NH-Gruppe enthält, erhältlich ist oder ein Derivat eines solchen Oxalkylierungsprodukte.

7. Pigmentpräparation gemäß den Ansprüchen 1 bis 4, enthaltend ein wasserlösliches Oxalkylierungsprodukt einer Verbindung, die durch Anlagerung von Styrol oder seinen Derivaten an ein Phenol oder Naphthol erhältlich ist oder ein Derivat eines solchen Oxalkylierungsproduktes.

8. Pigmentpräparation gemäß den Ansprüchen 1 bis 7, enthaltend, bezogen auf das Pigment- oder Pigment-Ruß-Gesamtgewicht, etwa 5 bis etwa 12 Gew.-% nichtionogenes Tensid.

9. Pigmentpräparation gemäß den Ansprüchen 1 bis 8, bestehend aus, bezogen auf das Gesamtgewicht der Präparation aus 20 bis 60 Gew.-%, bevorzugt 35 bis 50 Gew.-% organisches Pigment und/oder Ruß, 10 bis

30 Gew.-%, bevorzugt 14 bis 25 Gew.-% anorganisches Pigment, 3 bis 15 Gew.-%, bevorzugt 3 bis 8 Gew.-% nichtionogenes Tensid und 0 bis 20 Gew.-% übliche Zusatzstoffe und Wasser.

10. Verwendung einer Pigmentpräparation gemäß den Ansprüchen 1 bis 9 bei der Herstellung von Dispersionsanstrichfarben, Dispersionslackfarben und Druckfarben, insbesondere von Dispersionsanstrichfarben, Dispersionslackfarben und Textildruckfarben auf wäßriger Basis.